# EUROPEAN PATENT SPECIFICATION

(11) **EP 4 137 904 B1**
(45) Date of publication and mention of the grant of the patent: **07.05.2025**
(21) Application number: 20931687.6
(22) Date of filing: 17.09.2020
(51) Int. Cl.: G05D 1/00, A01D 34/00

(54) **TRAVERSAL METHOD AND SYSTEM, ROBOT AND READABLE STORAGE MEDIUM**
TRAVERSIERVERFAHREN UND SYSTEM, ROBOTER UND LESBARES SPEICHERMEDIUM
PROCÉDÉ ET SYSTÈME DE TRAVERSÉE, ROBOT ET SUPPORT DE STOCKAGE LISIBLE

(30) Priority: 17.04.2020 CN 202010304657
(43) Date of publication of application: 22.02.2023
(73) Proprietor: Suzhou Cleva Precision Machinery & Technology Co., Ltd., Suzhou, Jiangsu 215000 (CN)
(72) Inventor: ZHU, Shaoming, Suzhou, Jiangsu 215000 (CN); CHEN, Hong, Suzhou, Jiangsu 215000 (CN)
(74) Representative: Murgitroyd & Company
(86) International application number: PCT/CN2020/115888
(87) International publication number: WO 2021/208352

(56) References cited:
- CN-A- 106 020 207
- CN-A- 106 239 528
- CN-A- 109 298 718
- CN-A- 110 362 079
- CN-A- 110 579 213
- CN-A- 110 786 783
- JP-A- 2005 230 044
- JP-A- 2018 121 538
- US-A1- 2008 007 193
- US-A1- 2008 183 349
- US-A1- 2013 345 922

## Description

### FIELD OF THE INVENTION

The present invention relates to the field of intelligent control, and in particular, to a traversal method and system, a robot, and a readable storage medium.

### BACKGROUND

Low repetition rate and high coverage rate are the goals pursued by mobile robots such as traversing robots for dust absorption, mowing and swimming pool cleaning.

Taking an intelligent robot mower as an example, the robot mower works in a lawn enclosed by an electronic boundary as a working region. In practical applications, there are still obstacles such as artificial hills, flowers, fountains, etc. around the working region and in the lawn. The methods of random traversal of the robot mower and the lawn are complex and diverse, especially for the lawn with narrow passages or obstacles, the robot mower seldom randomly enters the narrow passages and the lawn near the obstacles, that is, the traversal ability is poor. As a result, the grass in some places of the lawn has not been mowed for a long time, especially when a certain region is large and square, the probability of missed mowing in the middle of the lawn is very high, and manual assisted removal is required.

In order to solve this problem, a variety of methods have been used without changing the random mode without changing the random mode: for example: by artificially setting different distances and increasing the number of wire windings as a starting point, this traversal method requires additional costs; and the robot is allowed to travel along the electronic boundary for different distances after leaving a charging station to enter the lawn, which will cause empty travel, and the long-term repeated travel will leave ruts to damage the lawn. Accordingly, the traversal methods in the prior art have the shortcomings of too high uniform distribution and random travel repetition rate and low mowing efficiency.

US2008/183349A1 discloses an autonomous robot (such as a mower) which generally moves randomly but provides improved coverage of narrow passageways by switching to a parallel scan mode. US2013/345922A1 discloses a method for processing a surface with a robotic vehicle which involves dividing the surface into segments and processing each section individually. US2008/007193A1 discloses various modes of covering an area for an autonomous robot including a random bounce mode, spiral mode *etc.*

### SUMMARY OF THE INVENTION

In order to solve the above technical problems, the objectives of the present invention are to provide a traversal method and system, a robot, and a readable storage medium.

In order to achieve one of the above objectives of the present invention, an embodiment of the present invention provides a traversal method, the method including: driving a robot to travel in a working region according to a predetermined mode and work synchronously; and
adjusting the robot to continue working according to a predetermined first rule every time a turn sign is encountered, and adjusting the robot to return to the predetermined mode after the first rule is completed.

The first rule is: starting from the position where the turn sign is encountered, rotating clockwise or counterclockwise; after first rotation is carried out according to a first angle, continuing running for a first time according to the predetermined mode; and then, after second rotation is carried out according to a second angle in the same rotation direction as the previous rotation, continuing running for a second time according to the predetermined mode, the first angle being different from the second angle.

Every time a turn signal is encountered, an angle value for the first angle is randomly obtained from a preset first rotation angle set, and an angle value for the second angle is randomly obtained from a preset second rotation angle set; wherein both the first rotation angle set and the second rotation angle set store a plurality of angle values, and the angle values stored in the first rotation angle set are different from the angle values stored in the second rotation angle set.

As a further improvement of an embodiment of the present invention, one of the first angle and the second angle may be a large angle, the other one may be a small angle, the large angle may be an obtuse angle, and the small angle may be an acute angle.

As a further improvement of an embodiment of the present invention, the value range of the large angle may be ∈ [120°, 170°], and the value range of the small angle may be E [20°, 80°].

As a further improvement of an embodiment of the present invention, the robot may be adjusted to continue working by cyclically calling the first rule and a second rule every time a turn sign is encountered, and the robot may be adjusted to return to the predetermined mode after the called first rule or second rule is completed;
The second rule is: starting from the position where the turn sign is encountered, rotating clockwise or counterclockwise; after first rotation is carried out according to either the first angle or the second angle, continuing running for a first time according to the predetermined mode; and then, after second rotation is carried out according to the other of the first angle or the second angle in the same rotation direction as the previous rotation, continuing running for a second time according to the predetermined mode, the first angle being different from the second angle, the rotation direction of one of the first rule and the second rule being one of clockwise rotation and counterclockwise rotation, and the rotation direction of the other rule being the other of the clockwise rotation and counterclockwise rotation.

As a further improvement of an embodiment of the present invention, the method may further include:
randomly obtaining at least one time length from a preset time set every time a turn sign is encountered, and assigning the obtained time length to the first time and/or the second time, wherein the time set includes a plurality of known time lengths.

In order to achieve one of the above objectives of the present invention, an embodiment of the present invention provides a robot, including a memory and a processor, the memory storing a computer program, and when the processor execute the computer program, the steps of the traversal method as described above are implemented.

In order to achieve one of the above objectives of the present invention, an embodiment of the present invention provides a readable storage medium, storing a computer program thereon, when the computer program is executed by a processor, the steps of the traversal method as described above are implemented.

In order to achieve another objective of the present invention, an embodiment of the present invention provides a traversal system, the system including:
a driving module, configured to drive a robot to travel in a working region according to a predetermined mode and work synchronously; and
a rule adjusting module, configured to adjust the robot to continue working according to a predetermined first rule every time a turn sign is encountered, and adjust the robot to return to the predetermined mode after the first rule is completed;
The first rule is: starting from the position where the turn sign is encountered, rotating clockwise or counterclockwise; after first rotation is carried out according to a first angle, continuing running for a first time according to the predetermined mode; and then, after second rotation is carried out according to a second angle in the same rotation direction as the previous rotation, continuing running for a second time according to the predetermined mode, the first angle being different from the second angle.

The system further comprises a storage module (300) configured to store a preset first rotation angle set and a preset second rotation angle set, both sets containing a plurality of angle values, wherein the angle values stored in the first rotation angle set are different from the angle values stored in the second rotation angle set. The rule adjusting module (200) is configured to randomly obtain an angle value for the first angle from the preset first rotation angle set, and an angle value for the second angle from the preset second rotation angle set every time a turn sign is encountered.

As a further improvement of an embodiment of the present invention, the rule adjusting module is further configured to adjust the robot to continue working by cyclically calling the first rule and a second rule every time a turn sign is encountered, and adjust the robot to return to the predetermined mode after the called first rule or second rule is completed;
The second rule is: starting from the position where the turn sign is encountered, rotating clockwise or counterclockwise; after first rotation is carried out according to either the first angle or the second angle, continuing running for a first time according to the predetermined mode; and then, after second rotation is carried out according to the other of the first angle or the second angle in the same rotation direction as the previous rotation, continuing running for a second time according to the predetermined mode, the first angle being different from the second angle, the rotation direction of one of the first rule and the second rule being one of clockwise rotation and counterclockwise rotation, and the rotation direction of the other rule being the other of the clockwise rotation and counterclockwise rotation.

Compared with the prior art, the traversal method and system, robot and readable storage medium of the present invention have the advantages that after the robot encounters a turn sign, the robot is driven to rotate according to randomly set different angles and then continues to work, which improves the probability that the robot enters a special region without affecting the working efficiency of the robot, thereby achieving the purpose of increasing the traversal ability and traversal efficiency by optimizing the behavior mode of the robot.

### BRIEF DESCRIPTION OF THE DRAWINGS

FIG. 1 is a schematic structural diagram of a robot mower system of the present invention;
FIG. 2 is a schematic flowchart of a traversal method provided by an embodiment of the present invention;
FIG. 3 is a schematic flowchart of a traversal method provided by a preferred embodiment of the present invention;
FIG. 4 is a schematic diagram of modules of a traversal system provided by an embodiment of the present invention.

### DETAILED DESCRIPTION OF THE EMBODIMENTS

The present invention will be described in detail below with reference to various embodiments shown in the accompanying drawings. However, these embodiments do not limit the present invention. Structures, methods, or functional transformations made by those of ordinary skill in the art based on these embodiments are all included within the protection scope of the present invention.

The robot system of the present invention may be a robot mower system, a sweeping robot system, a snow sweeper system, a leaf suction machine system, a golf course picker system, etc. Each system can automatically travel in a working region and perform corresponding work. In specific examples of the present invention, the robot mower system is taken as an example for detailed description. Correspondingly, the working region may be a lawn.

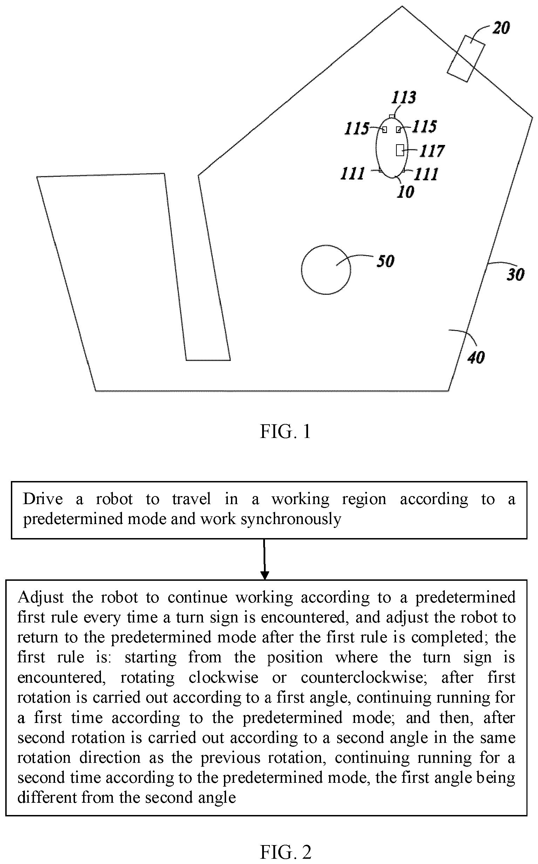

As shown in FIG. 1, the robot mower system of the present invention includes a robot mower (RM), a charging station 20, and a boundary line 30.

The robot mower includes: a main body 10, and a walking unit and a control unit that are arranged on the main body 10. The walking unit includes: driving wheels 111, a driven wheel(s) 113 and a motor for driving the driving wheels 111; the motor may be a brushless motor with a reduction box and a Hall sensor; after the motor is started, the driving wheels 111 can be driven to travel by the reduction box, and can run straight forward and backward, turn on site, run in an arc manner, etc. by controlling the speed and direction of the two wheels; and the driven wheel(s) 113 may be a universal wheel(s), the number of which is usually 1 or 2, for supporting balance.

The control unit includes at least: a state sensor 115 and a data memory 117. The state sensor is configured to acquire a variety of information obtained by the walking robot during the process of walking along a patrol path, for example: acquire signal strength of an electromagnetic boundary on the patrol path. The control unit is also configured to judge the specific position of the walking robot through received signals, for example: judge whether the robot encounters a corner. The data memory is configured to store the variety of information obtained by the walking robot during the process of walking along the patrol path. The data memory is, for example, an EPROM, a Flash or an SD card.

Further, the robot mower also includes: a working mechanism for working, and a power supply. In this embodiment, the working mechanism includes a mowing cutter head, and various sensors for sensing the walking state of the walking robot, such as dumping, ground clearance, collision and geomagnetic sensors and a gyroscope, which will not be described in detail here.

The charging station 20 is usually arranged on the boundary line, and is configured to provide power for automatically charging the robot mower, generate coded pulse signals and transmit the same along the boundary line 30 connected to the charging station, thereby generating an alternating magnetic field on both sides of the boundary line. The boundary line 30 surrounds a lawn 40 to form a working region. After the boundary line 30 encircles the lawn, a whole working region can be formed. In addition, obstacles 50 that need to prevent the robot mower from entering, such as a pool and flowers, are also arranged in the working region.

As shown in FIG. 2, a traversal method provided by an embodiment of the present invention includes the following steps: driving a robot to travel in a working region according to a predetermined mode and work synchronously; adjusting the robot to continue working according to a predetermined first rule every time a turn sign is encountered, and adjusting the robot to return to the predetermined mode after the first rule is completed. The first rule is: starting from the position where the turn sign is encountered, rotating clockwise or counterclockwise; after first rotation is carried out according to a first angle, continuing running for a first time according to the predetermined mode; and then, after second rotation is carried out according to a second angle in the same rotation direction as the previous rotation, continuing running for a second time according to the predetermined mode, the first angle being different from the second angle.

The turn sign includes: inner and outer boundaries of the working region, and obstacles in the working region. In an embodiment of the present invention, before the robot is driven to work, an electronic map covering the working region is established, and the turn sign is marked in the electronic map. In another embodiment of the present invention, during the walking process of the robot, the surrounding environment is explored in real time by sensors thereon, whether there is an obstacle on the travel path is judged in real time by means of touch perception, electromagnetic signal strength, etc., and if so, the position of the obstacle is marked with a turn sign. Of course, in other embodiments of the present invention, there are also multiple ways to determine turn signs, which will not be further described here.

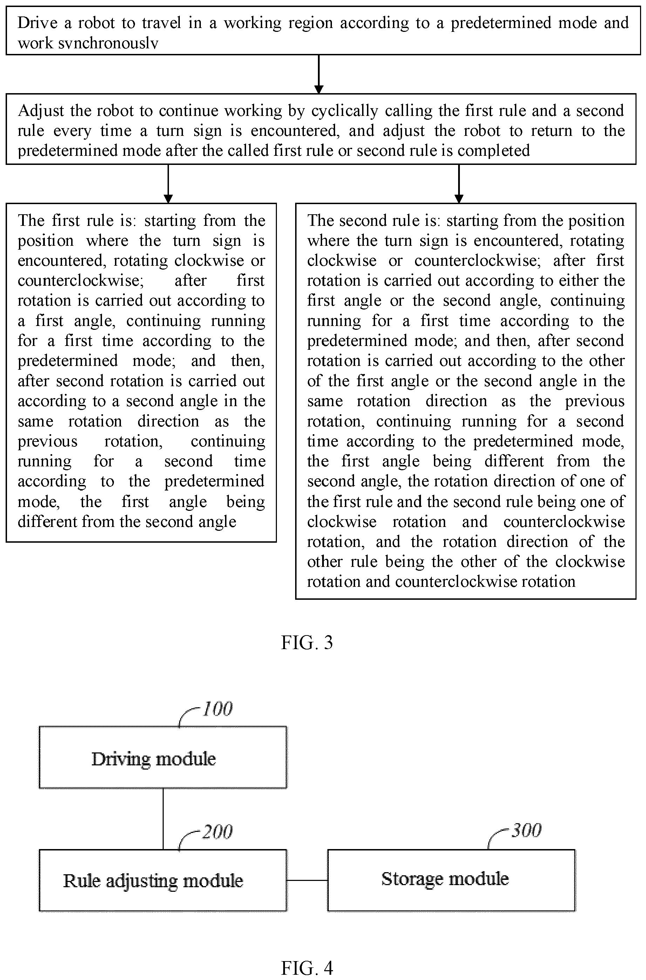

In a preferred embodiment of the present invention, with reference to FIG. 3, the method further includes: adjusting the robot to continue working by cyclically calling the first rule and a second rule every time a turn sign is encountered, and adjusting the robot to return to the predetermined mode after the called first rule or second rule is completed;

The second rule is: starting from the position where the turn sign is encountered, rotating clockwise or counterclockwise; after first rotation is carried out according to either the first angle or the second angle, continuing running for a first time according to the predetermined mode; and then, after second rotation is carried out according to the other of the first angle or the second angle in the same rotation direction as the previous rotation, continuing running for a second time according to the predetermined mode, the first angle being different from the second angle, the rotation direction of one of the first rule and the second rule being one of clockwise rotation and counterclockwise rotation, and the rotation direction of the other rule being the other of the clockwise rotation and counterclockwise rotation.

It should be noted that, in order to facilitate the rotation of the robot, under normal circumstances, when the robot encounters a turn sign, the robot is first driven to move backward for a small distance, and then turns according to the predetermined rule.

Preferably, one of the first angle and the second angle is a large angle, the other one is a small angle, the large angle is an obtuse angle, and the small angle is an acute angle.

In a specific embodiment of the present invention, the value range of the large angle is ∈ [120°, 170°], and the value range of the small angle is ∈ [20°, 80°].

Further, the method further includes: every time a turn sign is encountered, randomly obtaining an angle value from a preset first rotation angle set as the first angle, and randomly obtaining an angle value from a preset second rotation angle set as the second angle, where both the first rotation angle set and the second rotation angle set store a plurality of angle values, and the angle values stored in the first rotation angle set are different from the angle values stored in the second rotation angle set.

In this embodiment, for example, it is preset in the system that the first rotation angle set includes specific angle values of either a plurality of small angle values or large angle values, and the second rotation angle set includes specific angle values of the other of the plurality of small angle values and large angle values. When a turn sign is encountered, a small angle value and a large angle value are randomly obtained from the first rotation angle set and the second rotation angle set respectively at the current time, and the obtained small angle value and large angle value are randomly assigned to the first angle and the second angle.

Of course, in other embodiments of the present invention, a fixed small angle value and a fixed large angle value may also be set. Every time a turn sign is encountered, the fixed small angle value is assigned to one of the first angle and the second angle, and the fixed large angle is assigned to the other of the first angle and the second angle, which will not be further described here.

In a preferred embodiment of the present invention, the method further includes: randomly obtaining at least one time length from a preset time set every time a turn sign is encountered, and assigning the obtained time length to the first time and/or the second time, wherein the time set includes a plurality of known time lengths.

In this embodiment, the time set preset in the system includes a plurality of time lengths, for example: the time set includes: 5 minutes, 10 minutes, 15 minutes, 20 minutes, and 25 minutes. When a turn sign is encountered, the time length randomly obtained at the current time is 5 minutes. Correspondingly, the 5 minutes may be assigned to the first time and the second time synchronously, or the 5 minutes may be assigned to either the first time or the second time, then the time set is queried again, and a time length is obtained again and assigned to the other of the first time and the second time.

Of course, in other embodiments of the present invention, a fixed time length may also be set, and every time a turn sign is encountered, the fixed time length is assigned to the first time and/or the second time, which will not be further described here.

In a specific example of the present invention, the robot is adjusted to continue working by cyclically calling the first rule and the second rule every time a turn sign is encountered, and the robot is adjusted to return to the predetermined mode after the called first rule or second rule is completed. For example: the first rule is called when a turn sign is encountered for the first time, the second rule is called when a turn sign is encountered for the second time, the first rule is repeatedly called when a turn sign is encountered for the third time, and so on. In this specific example, the randomly obtained rotation angles are sequentially (120°, 60°), (-120°, -60°), (150°, 70°), (-150°, -70°), (50°, 140°), (-50°, -140°), and the first time and the second time are both 5 minutes. In this specific example, the positive angles indicates counterclockwise rotation, the negative angles indicates clockwise rotation, the angle values in odd numbers and in the same bracket correspond to the first rule, and the angle values in even numbers and in the same bracket correspond to the second rule; after each first rotation, the robot continues working for 5 minutes according to the current path and then carries out second rotation; and after each second rotation, the robot continues working for 5 minutes according to the current path, the current rule called is completed, and the robot rotates to the predetermined mode and continues working. It should be noted that, in practical applications, the direction and angle of rotation and the duration of the rule can be set as needed; moreover, in the process of calling the rule, if a corner is encountered again, or the robot returns to charging, or the robot fails, etc., it indicates that the current rule is completed.

The traversal of the working region in the above manner can ensure that the lawn in the boundary region, the middle part of the working region, and special working regions (such as a plurality of working regions connected by narrow passages) will be effectively traversed, which solves the problems of missed mowing caused by random travel for mowing and low mowing efficiency caused by repeated mowing.

In an embodiment of the present invention, a robot is further provided, including a memory and a processor, the memory storing a computer program, and when the processor executes the computer program, , the steps of the traversal method described above are implemented.

In an embodiment of the present invention, a readable storage medium is further provided, storing a computer program thereon, and when the computer program is executed by a processor, the steps of the traversal method described above are implemented.

With reference to FIG. 4, a traversal system is provided, the system including: a driving module 100 and a rule adjusting module 200.

The driving module 100 is configured to drive a robot to travel in a working region according to a predetermined mode and work synchronously. The rule adjusting module 200 is configured to adjust the robot to continue working according to a predetermined first rule every time a turn sign is encountered, and adjust the robot to return to the predetermined mode after the first rule is completed. The first rule is: starting from the position where the turn sign is encountered, rotating clockwise or counterclockwise; after first rotation is carried out according to a first angle, continuing running for a first time according to the predetermined mode; and then, after second rotation is carried out according to a second angle in the same rotation direction as the previous rotation, continuing running for a second time according to the predetermined mode, the first angle being different from the second angle.

In a preferred embodiment of the present invention, the rule adjusting module 200 is specifically configured to adjust the robot to continue working by cyclically calling the first rule and a second rule every time a turn sign is encountered, and adjust the robot to return to the predetermined mode after the called first rule or second rule is completed;

The second rule is: starting from the position where the turn sign is encountered, rotating clockwise or counterclockwise; after first rotation is carried out according to either the first angle or the second angle, continuing running for a first time according to the predetermined mode; and then, after second rotation is carried out according to the other of the first angle or the second angle in the same rotation direction as the previous rotation, continuing running for a second time according to the predetermined mode, the first angle being different from the second angle, the rotation direction of one of the first rule and the second rule being one of clockwise rotation and counterclockwise rotation, and the rotation direction of the other rule being the other of the clockwise rotation and counterclockwise rotation.

It should be noted that, in order to facilitate the rotation of the robot, under normal circumstances, when the robot encounters a turn sign, the robot is first driven to move backward for a small distance, and then turns according to the predetermined rule.

Preferably, one of the first angle and the second angle is a large angle, the other one is a small angle, the large angle is an obtuse angle, and the small angle is an acute angle.

In a specific embodiment of the present invention, the value range of the large angle is ∈ [120°, 170°], and the value range of the small angle is ∈ [20°, 80°].

Further, in a preferred embodiment of the present invention, the system further includes a storage module 300 for storing a preset first rotation angle set and a preset second rotation angle set, both the first rotation angle set and the second rotation angle set store a plurality of angle values, and the angle values stored in the first rotation angle set are different from the angle values stored in the second rotation angle set; and the rule adjusting module 200 is further configured to, every time a turn sign is encountered, randomly obtain an angle value from the preset first rotation angle set as the first angle, and randomly obtain an angle value from the preset second rotation angle set as the second angle.

In a preferred embodiment of the present invention, the storage module 300 is further configured to store a preset time set, the time set including plurality of known time lengths; and the rule adjusting module 200 is further configured to randomly obtain at least one time length from the preset time set every time a turn sign is encountered, and assign the obtained time length to the first time and/or the second time.

Those skilled in the art can clearly understand that, for the convenience and brevity of the description, the specific working processes of the systems and modules described above may be referred to the corresponding processes in the foregoing method embodiments, which will not be repeated here.

To sum up, the traversal method and system, robot and readable storage medium of the present invention have the advantages that after the robot encounters a turn sign, the robot is driven to rotate according to randomly set different angles and then continues to work, which improves the probability that the robot enters a special region without affecting the working efficiency of the robot, thereby achieving the purpose of increasing the traversal ability and traversal efficiency by optimizing the behavior mode of the robot.

In the several embodiments provided in this application, it should be understood that the disclosed modules, systems and methods can all be implemented in other ways. The system embodiment described above is only illustrative. The division of the modules is only a logic function division, and other divisions may be used in practice. For example, a plurality of modules or components may be combined or integrated to another system, or some features may be neglected or not executed.

The modules described as separate components may be or may not be physically separated, and the components displayed as modules may be or may not be physical modules, that is, the components may be located at one place or may also be distributed on a plurality of network modules. Some or all of the modules may be selected according to actual requirements to achieve the objective of the solution in this embodiment.

In addition, each functional module in each embodiment of the present application may be integrated into one processing module, or each module may exist physically alone, or two or more modules may be integrated into one module. The integrated modules may be implemented in the form of hardware, or may be implemented in the form of hardware plus software function modules.

## Claims

1. A traversal method, comprising:
driving a robot to travel in a working region according to a predetermined mode and work synchronously; and
adjusting the robot to continue working according to a predetermined first rule every time a turn sign is encountered, and adjusting the robot to return to the predetermined mode after the first rule is completed;
wherein the first rule is: starting from the position where the turn sign is encountered, rotating clockwise or counterclockwise; after first rotation is carried out according to a first angle, continuing running for a first time according to the predetermined mode; and then, after second rotation is carried out according to a second angle in the same rotation direction as the previous rotation, continuing running for a second time according to the predetermined mode, the first angle being different from the second angle;
**characterized in that** every time a turn sign is encountered, an angle value for the first angle is randomly obtained from a preset first rotation angle set, and an angle value for the second angle is randomly obtained from a preset second rotation angle set; wherein both the first rotation angle set and the second rotation angle set store a plurality of angle values, and the angle values stored in the first rotation angle set are different from the angle values stored in the second rotation angle set.

2. The traversal method according to claim 1, wherein one of the first angle and the second angle is a large angle, the other one is a small angle, the large angle is an obtuse angle, and the small angle is an acute angle.

3. The traversal method according to claim 2, wherein the value range of the large angle is ∈ [120°, 170°], and the value range of the small angle is ∈ [20°, 80°].

4. The traversal method according to claim 1, wherein the method further comprises: adjusting the robot to continue working by cyclically calling a first rule and a second rule every time a turn sign is encountered, and adjusting the robot to return to the predetermined mode after the called first rule or second rule is completed;
wherein the second rule is: starting from the position where the turn sign is encountered, rotating clockwise or counterclockwise; after first rotation is carried out according to either the first angle or the second angle, continuing running for a first time according to the predetermined mode; and then, after second rotation is carried out according to the other of the first angle or the second angle in the same rotation direction as the previous rotation, continuing running for a second time according to the predetermined mode, the first angle being different from the second angle, the rotation direction of one of the first rule and the second rule being one of clockwise rotation and counterclockwise rotation, and the rotation direction of the other rule being the other of the clockwise rotation and counterclockwise rotation.

5. The traversal method according to claim 1, wherein the method further comprises: randomly obtaining at least one time length from a preset time set every time a turn sign is encountered, and assigning the obtained time length to the first time and/or the second time, wherein the time set comprises a plurality of known time lengths.

6. A robot, comprising a memory and a processor, the memory storing a computer program, **characterized in that** when the processor executes the computer program, the steps of the traversal method according to any one of claims 1-5 are implemented.

7. A readable storage medium, storing a computer program thereon, **characterized in that** when the computer program is executed by a processor, the steps of the traversal method according to any one of claims 1-5 are implemented.

8. A traversal system, comprising:
a driving module (100), configured to drive a robot to travel in a working region according to a predetermined mode and work synchronously; and
a rule adjusting module (200), configured to adjust the robot to continue working according to a predetermined first rule every time a turn sign is encountered, and adjust the robot to return to the predetermined mode after the first rule is completed;
wherein the first rule is: starting from the position where the turn sign is encountered, rotating clockwise or counterclockwise; after first rotation is carried out according to a first angle, continuing running for a first time according to the predetermined mode; and then, after second rotation is carried out according to a second angle in the same rotation direction as the previous rotation, continuing running for a second time according to the predetermined mode, the first angle being different from the second angle; **characterized in that** the system further comprises a storage module (300) configured to store a preset first rotation angle set and a preset second rotation angle set, both sets containing a plurality of angle values, wherein the angle values stored in the first rotation angle set are different from the angle values stored in the second rotation angle set, and the rule adjusting module (200) is configured to randomly obtain an angle value for the first angle from the preset first rotation angle set, and an angle value for the second angle from the preset second rotation angle set every time a turn sign is encountered.

9. The traversal system according to claim 8, **characterized in that** the rule adjusting module (200) is further configured to adjust the robot to continue working by cyclically calling the first rule and a second rule every time a turn sign is encountered, and adjust the robot to return to the predetermined mode after the called first rule or second rule is completed;
wherein the second rule is: starting from the position where the turn sign is encountered, rotating clockwise or counterclockwise; after first rotation is carried out according to either the first angle or the second angle, continuing running for a first time according to the predetermined mode; and then, after second rotation is carried out according to the other of the first angle or the second angle in the same rotation direction as the previous rotation, continuing running for a second time according to the predetermined mode, the first angle being different from the second angle, the rotation direction of one of the first rule and the second rule being one of clockwise rotation and counterclockwise rotation, and the rotation direction of the other rule being the other of the clockwise rotation and counterclockwise rotation.

## Patentansprüche

1. Ein Traversierungsverfahren, das Folgendes beinhaltet:
Antreiben eines Roboters, gleichzeitig in einem Arbeitsbereich gemäß einem vorbestimmten Modus zu fahren und zu arbeiten; und
Einstellen des Roboters, jedes Mal, wenn ein Wendezeichen angetroffen wird, gemäß einer vorbestimmten ersten Regel weiterzuarbeiten, und Einstellen des Roboters, zu dem vorbestimmten Modus zurückzukehren, nachdem die erste Regel abgeschlossen ist;
wobei die erste Regel Folgende ist: Beginnen bei der Position, wo das Wendezeichen angetroffen wird, Rotieren im Uhrzeigersinn oder gegen den Uhrzeigersinn; nachdem die erste Rotation gemäß einem ersten Winkel ausgeführt ist, Weiterlaufen für eine erste Zeit gemäß dem vorbestimmten Modus; und dann, nachdem die zweite Rotation gemäß einem zweiten Winkel in die gleiche Rotationsrichtung wie die vorherige Rotation ausgeführt ist, Weiterlaufen für eine zweite Zeit gemäß dem vorbestimmten Modus, wobei sich der erste Winkel von dem zweiten Winkel unterscheidet;
**dadurch gekennzeichnet, dass** jedes Mal, wenn ein Wendezeichen angetroffen wird, ein Winkelwert für den ersten Winkel willkürlich aus einem voreingestellten ersten Rotationswinkelsatz erhalten wird und ein Winkelwert für den zweiten Winkel willkürlich aus einem voreingestellten zweiten Rotationswinkelsatz erhalten wird; wobei sowohl der erste Rotationswinkelsatz als auch der zweite Rotationswinkelsatz eine Vielzahl von Winkelwerten speichern und sich die Winkelwerte, die in dem ersten Rotationswinkelsatz gespeichert sind, von den Winkelwerten, die in dem zweiten Rotationswinkelsatz gespeichert sind, unterscheiden.

2. Traversierungsverfahren gemäß Anspruch 1, wobei einer des ersten Winkels und des zweiten Winkels ein großer Winkel ist, der andere ein kleiner Winkel ist, der große Winkel ein stumpfer Winkel ist und der kleine Winkel ein spitzer Winkel ist.

3. Traversierungsverfahren gemäß Anspruch 2, wobei der Wertebereich des großen Winkels ∈ [120°, 170°] ist und der Wertebereich des kleinen Winkels ∈ [20°, 80°] ist.

4. Traversierungsverfahren gemäß Anspruch 1, wobei das Verfahren ferner Folgendes beinhaltet: Einstellen des Roboters jedes Mal, wenn ein Wendezeichen angetroffen wird, durch das zyklische Abrufen einer ersten Regel und einer zweiten Regel weiterzuarbeiten, und Einstellen des Roboters, zu dem vorbestimmten Modus zurückzukehren, nachdem die abgerufene erste Regel oder zweite Regel abgeschlossen ist;
wobei die zweite Regel Folgende ist: Beginnen bei der Position, wo das Wendezeichen angetroffen wird, Rotieren im Uhrzeigersinn oder gegen den Uhrzeigersinn; nachdem die erste Rotation gemäß entweder dem ersten Winkel oder dem zweiten Winkel ausgeführt ist, Weiterlaufen für eine erste Zeit gemäß dem vorbestimmten Modus; und
dann, nachdem die zweite Rotation gemäß einem anderen Winkel des ersten Winkels oder des zweiten Winkels in die gleiche Rotationsrichtung wie die vorherige Rotation ausgeführt ist, Weiterlaufen für eine zweite Zeit gemäß dem vorbestimmten Modus, wobei sich der erste Winkel von dem zweiten Winkel unterscheidet, die Rotationsrichtung einer der ersten Regel und der zweiten Regel eine von Rotation im Uhrzeigersinn oder Rotation gegen den Uhrzeigersinn ist und die Rotationsrichtung der anderen Regel die andere der Rotation im Uhrzeigersinn oder Rotation gegen den Uhrzeigersinn ist.

5. Traversierungsverfahren gemäß Anspruch 1, wobei das Verfahren ferner Folgendes beinhaltet: willkürliches Erhalten mindestens einer Zeitlänge von einem voreingestellten Zeitsatz jedes Mal, wenn ein Wendezeichen angetroffen wird, und Zuordnen der erhaltenen Zeitlänge zu der ersten Zeit und/oder der zweiten Zeit, wobei der Zeitsatz eine Vielzahl von bekannten Zeitlängen beinhaltet.

6. Ein Roboter, der einen Speicher und einen Prozessor beinhaltet, wobei der Speicher ein Computerprogramm speichert, **dadurch gekennzeichnet, dass**, wenn der Prozessor das Computerprogramm ausführt, die Schritte des Traversierungsverfahrens gemäß einem der Ansprüche 1-5 implementiert werden.

7. Ein lesbares Speicherungsmedium, das ein Computerprogramm darauf speichert, **dadurch gekennzeichnet, dass**, wenn das Computerprogramm durch einen Prozessor ausgeführt wird, die Schritte des Traversierungsverfahrens gemäß einem der Ansprüche 1-5 implementiert werden.

8. Ein Traversierungssystem, das Folgendes beinhaltet:
ein Antriebsmodul (100), das konfiguriert ist, um einen Roboter anzutreiben, um gleichzeitig in einem Arbeitsbereich gemäß einem vorbestimmten Modus zu fahren und zu arbeiten; und
ein Regeleinstellungsmodul (200), das konfiguriert ist, um den Roboter einzustellen, um jedes Mal, wenn ein Wendezeichen angetroffen wird, gemäß einer vorbestimmten ersten Regel weiterzuarbeiten, und den Roboter einzustellen, zu dem vorbestimmten Modus zurückzukehren, nachdem die erste Regel abgeschlossen ist;
wobei die erste Regel Folgende ist: Beginnen bei der Position, wo das Wendezeichen angetroffen wird, Rotieren im Uhrzeigersinn oder gegen den Uhrzeigersinn; nachdem die erste Rotation gemäß einem ersten Winkel ausgeführt ist, Weiterlaufen für eine erste Zeit gemäß dem vorbestimmten Modus; und dann, nachdem die zweite Rotation gemäß einem zweiten Winkel in die gleiche Rotationsrichtung wie die vorherige Rotation ausgeführt ist, Weiterlaufen für eine zweite Zeit gemäß dem vorbestimmten Modus, wobei sich der erste Winkel von dem zweiten Winkel unterscheidet; **dadurch gekennzeichnet, dass** das System ferner ein Speicherungsmodul (300) beinhaltet, das konfiguriert ist, um einen voreingestellten ersten Rotationswinkelsatz und einen voreingestellten zweiten Rotationswinkelsatz zu speichern, wobei beide Sätze eine Vielzahl von Winkelwerten enthalten, wobei sich die Winkelwerte, die in dem ersten Rotationswinkelsatz gespeichert sind, von den Winkelwerten, die in dem zweiten Rotationswinkelsatz gespeichert sind, unterscheiden, und das Regeleinstellungsmodul (200) konfiguriert ist, um willkürlich einen Winkelwert für den ersten Winkel von dem voreingestellten ersten Rotationswinkelsatz und einen Winkelwert für den zweiten Winkel von dem voreingestellten zweiten Rotationswinkelsatz jedes Mal, wenn ein Wendezeichen angetroffen wird, zu erhalten.

9. Traversierungssystem gemäß Anspruch 8, **dadurch gekennzeichnet, dass** das Regeleinstellungsmodul (200) ferner konfiguriert ist, um den Roboter einzustellen, durch das zyklische Abrufen der ersten Regel und einer zweiten Regel jedes Mal, wenn ein Wendezeichen angetroffen wird, weiterzuarbeiten, und den Roboter einzustellen, zu dem vorbestimmten Modus zurückzukehren, nachdem die abgerufene erste Regel oder zweite Regel abgeschlossen ist;
wobei die zweite Regel Folgende ist: Beginnen bei der Position, wo das Wendezeichen angetroffen wird, Rotieren im Uhrzeigersinn oder gegen den Uhrzeigersinn; nachdem die erste Rotation gemäß entweder dem ersten Winkel oder dem zweiten Winkel ausgeführt ist, Weiterlaufen für eine erste Zeit gemäß dem vorbestimmten Modus; und
dann, nachdem die zweite Rotation gemäß dem anderen des ersten Winkels oder des zweiten Winkels in die gleiche Rotationsrichtung wie die vorherige Rotation ausgeführt ist, Weiterlaufen für eine zweite Zeit gemäß dem vorbestimmten Modus, wobei sich der erste Winkel von dem zweiten Winkel unterscheidet, die Rotationsrichtung einer der ersten Regel und der zweiten Regel eine von Rotation im Uhrzeigersinn oder Rotation gegen den Uhrzeigersinn ist und die Rotationsrichtung der anderen Regel die andere der Rotation im Uhrzeigersinn oder Rotation gegen den Uhrzeigersinn ist.

## Revendications

1. Un procédé de traversée, comprenant :
entraîner un robot à se déplacer dans une zone de travail selon un mode prédéterminé et à travailler en synchronisme ; et
régler le robot afin qu'il continue à travailler selon une première règle prédéterminée à chaque fois qu'une signalisation de virage est rencontrée, et régler le robot afin qu'il revienne au mode prédéterminé après que la première règle a été suivie ;
où la première règle est : à partir de la position à laquelle la signalisation de virage est rencontrée, tourner dans le sens des aiguilles d'une montre ou dans le sens inverse des aiguilles d'une montre ; après qu'une première rotation a été effectuée selon un premier angle, continuer à avancer pendant une première durée selon le mode prédéterminé ; et ensuite, après qu'une deuxième rotation a été effectuée selon un deuxième angle dans le même sens de rotation que la rotation précédente, continuer à avancer pendant une deuxième durée selon le mode prédéterminé, le premier angle étant différent du deuxième angle ;
**caractérisé en ce qu'**à chaque fois qu'une signalisation de virage est rencontrée, une valeur d'angle pour le premier angle est obtenue aléatoirement auprès d'un ensemble de premiers angles de rotation préétabli, et une valeur d'angle pour le deuxième angle est obtenue aléatoirement auprès d'un ensemble de deuxièmes angles de rotation préétabli ; où tant l'ensemble de premiers angles de rotation que l'ensemble de deuxièmes angles de rotation stockent une pluralité de valeurs d'angle, et les valeurs d'angle stockées dans l'ensemble de premiers angles de rotation sont différentes des valeurs d'angle stockées dans l'ensemble de deuxièmes angles de rotation.

2. Le procédé de traversée selon la revendication 1, où un angle parmi le premier angle et le deuxième angle est un grand angle, l'autre angle est un petit angle, le grand angle est un angle obtus, et le petit angle est un angle aigu.

3. Le procédé de traversée selon la revendication 2, où la fourchette de valeurs du grand angle est ∈ [120°, 170°], et la fourchette de valeurs du petit angle est ∈ [20°, 80°].

4. Le procédé de traversée selon la revendication 1, le procédé comprenant en outre :
régler le robot afin qu'il continue à travailler en appelant cycliquement une première règle et une deuxième règle à chaque fois qu'une signalisation de virage est rencontrée, et régler le robot afin qu'il revienne au mode prédéterminé après que la première règle ou deuxième règle appelée a été suivie ;
où la deuxième règle est : à partir de la position à laquelle la signalisation de virage est rencontrée, tourner dans le sens des aiguilles d'une montre ou dans le sens inverse des aiguilles d'une montre ; après qu'une première rotation a été effectuée selon soit le premier angle, soit le deuxième angle, continuer à avancer pendant une première durée selon le mode prédéterminé ; et ensuite, après qu'une deuxième rotation a été effectuée selon l'autre angle parmi le premier angle et le deuxième angle dans le même sens de rotation que la rotation précédente, continuer à avancer pendant une deuxième durée selon le mode prédéterminé, le premier angle étant différent du deuxième angle, le sens de rotation d'une règle parmi la première règle et la deuxième règle étant une rotation parmi une rotation dans le sens des aiguilles d'une montre et une rotation dans le sens inverse des aiguilles d'une montre, et le sens de rotation de l'autre règle étant l'autre rotation parmi la rotation dans le sens des aiguilles d'une montre et la rotation dans le sens inverse des aiguilles d'une montre.

5. Le procédé de traversée selon la revendication 1, le procédé comprenant en outre : obtenir aléatoirement au moins une durée d'écoulement auprès d'un ensemble de durées préétabli à chaque fois qu'une signalisation de virage est rencontrée, et attribuer la durée d'écoulement obtenue à la première durée et/ou à la deuxième durée, l'ensemble de durées comprenant une pluralité de durées d'écoulement connues.

6. Un robot, comprenant une mémoire et un processeur, la mémoire stockant un programme d'ordinateur, **caractérisé en ce que** lorsque le processeur exécute le programme d'ordinateur, les étapes du procédé de traversée selon n'importe laquelle des revendications 1 à 5 sont mises en œuvre.

7. Un support de stockage lisible, sur lequel est stocké un programme d'ordinateur, **caractérisé en ce que** lorsque le programme d'ordinateur est exécuté par un processeur, les étapes du procédé de traversée selon n'importe laquelle des revendications 1 à 5 sont mises en œuvre.

8. Un système de traversée, comprenant :
un module d'entraînement (100), configuré pour entraîner un robot à se déplacer dans une zone de travail selon un mode prédéterminé et à travailler en synchronisme ; et
un module de réglage à règles (200), configuré pour régler le robot afin qu'il continue à travailler selon une première règle prédéterminée à chaque fois qu'une signalisation de virage est rencontrée, et régler le robot afin qu'il revienne au mode prédéterminé après que la première règle a été suivie ;
où la première règle est : à partir de la position à laquelle la signalisation de virage est rencontrée, tourner dans le sens des aiguilles d'une montre ou dans le sens inverse des aiguilles d'une montre ; après qu'une première rotation a été effectuée selon un premier angle, continuer à avancer pendant une première durée selon le mode prédéterminé ; et ensuite, après qu'une deuxième rotation a été effectuée selon un deuxième angle dans le même sens de rotation que la rotation précédente, continuer à avancer pendant une deuxième durée selon le mode prédéterminé, le premier angle étant différent du deuxième angle ; **caractérisé en ce que** le système comprend en outre un module de stockage (300) configuré pour stocker un ensemble de premiers angles de rotation préétabli et un ensemble de deuxièmes angles de rotation préétabli, les deux ensembles contenant une pluralité de valeurs d'angle, où les valeurs d'angle stockées dans l'ensemble de premiers angles de rotation sont différentes des valeurs d'angle stockées dans l'ensemble de deuxièmes angles de rotation, et le module de réglage à règles (200) est configuré pour obtenir aléatoirement une valeur d'angle pour le premier angle auprès de l'ensemble de premiers angles de rotation préétabli, et une valeur d'angle pour le deuxième angle auprès de l'ensemble de deuxièmes angles de rotation préétabli à chaque fois qu'une signalisation de virage est rencontrée.

9. Le système de traversée selon la revendication 8, **caractérisé en ce que** le module de réglage à règles (200) est configuré en outre pour régler le robot afin qu'il continue à travailler en appelant cycliquement la première règle et une deuxième règle à chaque fois qu'une signalisation de virage est rencontrée, et régler le robot afin qu'il revienne au mode prédéterminé après que la première règle ou deuxième règle appelée a été suivie ;
où la deuxième règle est : à partir de la position à laquelle la signalisation de virage est rencontrée, tourner dans le sens des aiguilles d'une montre ou dans le sens inverse des aiguilles d'une montre ; après qu'une première rotation a été effectuée selon soit le premier angle, soit le deuxième angle, continuer à avancer pendant une première durée selon le mode prédéterminé ; et ensuite, après qu'une deuxième rotation a été effectuée selon l'autre angle parmi le premier angle et le deuxième angle dans le même sens de rotation que la rotation précédente, continuer à avancer pendant une deuxième durée selon le mode prédéterminé, le premier angle étant différent du deuxième angle, le sens de rotation d'une règle parmi la première règle et la deuxième règle étant une rotation parmi une rotation dans le sens des aiguilles d'une montre et une rotation dans le sens inverse des aiguilles d'une montre, et le sens de rotation de l'autre règle étant l'autre rotation parmi la rotation dans le sens des aiguilles d'une montre et la rotation dans le sens inverse des aiguilles d'une montre.
